# EUROPEAN PATENT APPLICATION

(11) **EP 4 554 182 A1**
(43) Date of publication of application: **14.05.2025**
(21) Application number: 23838409.3
(22) Date of filing: 21.02.2023
(51) Int. Cl.: H04L 47/6275, H04L 47/2408

(54) **DATA SCHEDULING METHOD, AND ELECTRONIC DEVICE AND STORAGE MEDIUM**

(30) Priority: 15.07.2022 CN 202210829991
(71) Applicant: ZTE Corporation, Shenzhen, Guangdong 518057 (CN)
(72) Inventor: NIU, Yanmin, Shenzhen, Guangdong 518057 (CN); CHE, Zhonghui, Shenzhen, Guangdong 518057 (CN)
(74) Representative: Ziebig Hengelhaupt Intellectual Property Attorneys Patentanwaltskanzlei PartGmbB
(86) International application number: PCT/CN2023/077428
(87) International publication number: WO 2024/011907

(57) **Abstract**

Provided in the embodiments of the present application are a data scheduling method, and an electronic device and a storage medium. The method comprises: acquiring a plurality of pieces of data to be scheduled (S200), including requirement information for network features; determining target network slices from among a plurality of network slices according to network features of the network slices and the requirement information, and allocating, to the target network slices, the data to be scheduled, so as to obtain slice data (S300); configuring priority identifiers for the plurality of pieces of slice data (S400); according to the priority identifiers, allocating the plurality of pieces of slice data to different sub-queues of different queue groups (S600); and scheduling the slice data in different sub-queues of different queue groups (S700).

## Description

### CROSS-REFERENCE TO RELATED APPLICATIONS

The present application is proposed based on and claims the priority of the Chinese patent application with the application No. 202210829991.9 and the filing date of July 15, 2022, the entire contents of which are incorporated herein by reference.

### TECHNICAL FIELD

Embodiments of the present application relate to, but are not limited to, the technical field of communications, in particular to a data scheduling method, and an electronic device and a storage medium.

### BACKGROUND

For a complex 5G network environment, a network slicing technology performs on-demand networking on a unified network infrastructure to provide a plurality of logically isolated virtual networks. At present, scheduling of data of network slices usually adopts a default first input first output (FIFO) scheduling mode of a Linux kernel system, and in the first input first output scheduling mode, packets are sent according to an entry order of the data of the network slices. When a network is congested, a default tail-drop policy is usually adopted to drop all data arriving later, and this tail-drop policy causes service interruptions and reduces the network quality of service.

### SUMMARY

The following is an overview of topics described in detail herein. This overview is not intended to limit the scope of protection of claims.

Provided in embodiments of the present application are a data scheduling method, and an electronic device and a storage medium.

In a first aspect, an embodiment of the present application provides a data scheduling method, including: acquiring a plurality of pieces of data to be scheduled, wherein the data to be scheduled includes requirement information, and the requirement information represents network features required by the data to be scheduled; determining, for each piece of data to be scheduled, a target network slice from a plurality of network slices according to network features of the network slices and the requirement information, and allocating, to the target network slice, the data to be scheduled, so as to obtain slice data; configuring priority identifiers for the plurality of pieces of slice data; allocating the plurality of pieces of slice data to different sub-queues of different queue groups according to the priority identifiers; and scheduling the slice data in different sub-queues of different queue groups.

In a second aspect, an embodiment of the present application further provides an electronic device, including a memory, a processor and a computer program stored on the memory and capable of running on the processor, and the processor, when executing the computer program, implements the data scheduling method described above.

In a third aspect, an embodiment of the present application further provides a computer readable storage medium, storing a computer executable instruction, and the computer executable instruction is used to execute the data scheduling method described above.

### BRIEF DESCRIPTION OF DRAWINGS

Accompanying drawings are used to provide a further understanding of technical solutions of the present application, form a part of the specification, are used together with embodiments of the present application to explain the technical solutions of present application, and do not constitute a limitation on the technical solutions of present application.
FIG. 1 is a schematic diagram of steps of a data scheduling method provided by an embodiment of the present application.
FIG. 2 is another schematic diagram of steps of a data scheduling method provided by an embodiment of the present application.
FIG. 3 is a schematic diagram of steps of determining priority identifiers provided by an embodiment of the present application.
FIG. 4 is a schematic diagram of substeps of step S700 provided by an embodiment of the present application.
FIG. 5 is a schematic diagram of substeps of step S710 provided by an embodiment of the present application.
FIG. 6 is a schematic diagram of substeps of step S720 provided by an embodiment of the present application.
FIG. 7 is another schematic diagram of substeps of step S720 provided by an embodiment of the present application.
FIG. 8 is a schematic diagram of a scenario of network slices based on different network features provided by an embodiment of the present application.
FIG. 9 is a schematic diagram of a scheduling policy architecture provided by an embodiment of the present application.
FIG. 10 is a structural schematic diagram of an electronic device provided by an embodiment of the present application.

### DETAILED DESCRIPTION

In order to make objectives, technical solutions and advantages of the present application more clear and understandable, the present application is further illustrated in detail below in conjunction with accompanying drawings and embodiments. It should be understood that the specific embodiments described herein are only used to explain the present application and are not used to limit the present application.

It needs to be noted that although the division of functional modules is made in a schematic diagram of an apparatus and a logical sequence is shown in a flowchart, in some cases, steps shown or described may be executed differently from the division of modules in the apparatus or the sequence in the flowchart. Terms "first", "second" and the like in the specification, claims and the above accompanying drawings are used to distinguish similar objects, and need not be used to describe a specific order or sequence.

Provided in the embodiments of the present application are a data scheduling method, and an electronic device and a storage medium. The data scheduling method includes: acquiring a plurality of pieces of data to be scheduled, wherein the data to be scheduled includes requirement information representing required network features; determining, for each piece of data to be scheduled, a target network slice from a plurality of network slices according to network features of the network slices and the requirement information, and allocating, to the target network slice, the data to be scheduled, so as to obtain slice data; configuring priority identifiers for the plurality of pieces of slice data; allocating the plurality of pieces of slice data to different sub-queues of different queue groups according to the priority identifiers; and scheduling the slice data in different sub-queues of different queue groups according to round robin scheduling processing and priority queue scheduling processing. According to the solutions provided by the embodiments of the present application, the different data to be scheduled is configured into the different network slices according to the network features, the slice data is allocated into queues according to the priorities, the slice data in the queues is scheduled in combination with the round robin scheduling processing and the priority queue scheduling processing, so that important slice data is scheduled with priority to a certain extent, while ordinary slice data can also be scheduled, which realizes reasonable scheduling of different slice data and thus improves the network quality of service.

The embodiments of the present application are further illustrated below in conjunction with the accompanying drawings.

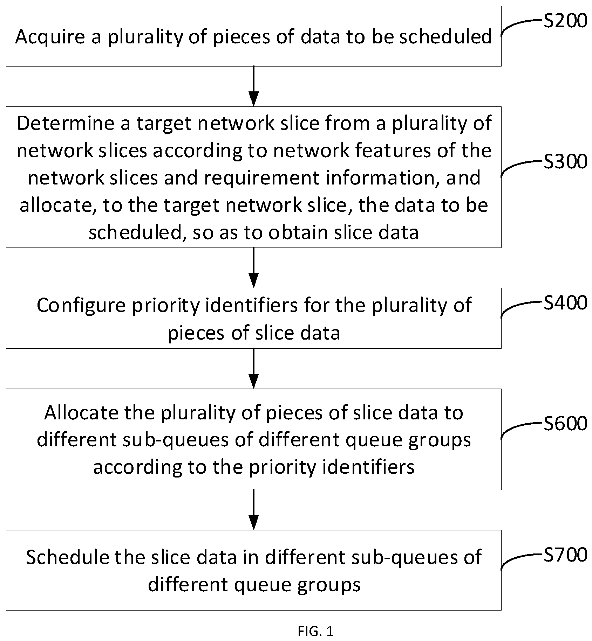

An embodiment of the present application provides a data scheduling method. Referring to FIG. 1, FIG. 1 is a diagram of steps of a data scheduling method. The data scheduling method includes, but is not limited to, the following steps S200-S700.

In Step S200, a plurality of pieces of data to be scheduled is acquired. The data to be scheduled includes requirement information, and the requirement information represents network features required by the data to be scheduled.

In Step S300, for each piece of data to be scheduled, a target network slice is determined from a plurality of network slices according to network features of the network slices and the requirement information, and the data to be scheduled is allocated to the target network slice, so as to obtain slice data.

In Step S400, priority identifiers are configured for the plurality of pieces of slice data.

In Step S600, the plurality of pieces of slice data is allocated to different sub-queues of different queue groups according to the priority identifiers.

In Step S700, the slice data in different sub-queues of different queue groups is scheduled.

Various intelligent terminal devices access customer premise equipment (CPE) through network cables, mobile networks or Wi-Fi networks. The intelligent terminal devices may include, but are not limited to, any one or more of a smart watch, a smart phone, a computer, a smart printer, a digital camera, a personal digital assistant, a smart voice interaction device, a smart home appliance, or a vehicle-mounted terminal. The customer premise equipment is a network connection device configured to access the Internet or services on a network of a provider. The customer premise equipment is located on a user side of the network and may be a demarcation point between the network of the provider and a home network or local area network of a customer.

The customer premise equipment performs network slicing on the network by executing the following step. In Step S100, network slicing processing is performed on the network according to the network features to obtain the plurality of network slices. The different network slices have the different network features.

It may be understood that network slicing refers to that a network architecture defined by a 3GPP protocol is functionally tailored on the same shared network infrastructure in a combination on demand to provide a plurality of logical networks oriented to user equipment. Network slicing slices, according to different application scenarios and service index requirements, a physical network from a radio access network to a bearer network and then to a core network into a plurality of independent end-to-end logically isolated logical networks to adapt to service applications of various index requirements. Each network slice may flexibly define its own logical topology, SLA requirements, reliability and security level. All network slices are logically isolated, i.e., an abnormality of one slice does not affect other slices, realizing service isolation, resource isolation, and operation and maintenance isolation.

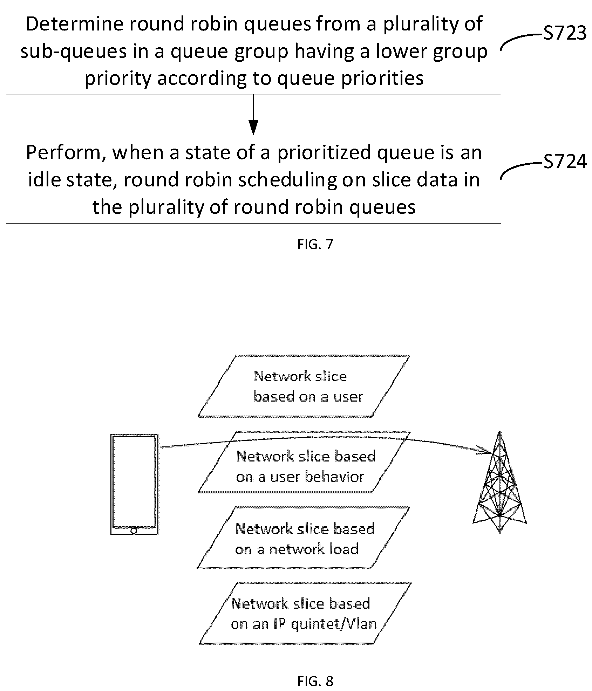

In some embodiments, the network features include at least one of a first feature based on a user terminal, a second feature based on a user behavior, a third feature based on a network load, a fourth feature based on an IP quintet, and a fifth feature based on a virtual local area network. Referring to FIG. 8, the network is divided into four network slices, i.e., a network slice based on a user, a network slice based on a user behavior, a network slice based on a network load, and a network slice based on an IP quintet/Vlan. Of course, in other embodiments, other network features may also be adopted. Network resources with different network qualities of service (QoS) and service-level agreements (SLAs) may be provided according to service requirements. Slices can further be customized in accordance with durations, capacity requirements, speed requirements, latency requirements, reliability requirements, security requirements, and availability requirements of service, so that the same network and different slices are used to meet various service requirements.

The overall architecture of network slices is divided into three layers, i.e., a network slice forwarding layer, a network slice control layer and a network slice management layer. The network slice forwarding layer supports dividing forwarding resources in the physical network into a plurality of copies that are mutually isolated and provided to be used by different network slices respectively. The network slice control layer is used to generate different instances of logical network slices in the physical network, provide an on-demand customized logical topology connection, and integrate the logical topology of the slices with the network resources allocated for the slices to constitute network slices that meet specific service requirements. The network slice management layer provides a lifecycle management function for the network slices.

For step S200, the intelligent terminal sends the data to be scheduled to the customer premise equipment, and the customer premise equipment acquires a plurality of data to be scheduled. A message of the data to be scheduled contains a field corresponding to the requirement information, and the requirement information represents network features required by the data to be scheduled.

For step S300, for a piece of data to be scheduled, according to the network feature required by the data to be scheduled represented by the requirement information in the data to be scheduled, a network slice whose network feature corresponds to the network feature required by the data to be scheduled is determined as the target network slice from the plurality of network slices, i.e., the network feature of the target network slice corresponds to the network feature required by the data to be scheduled. For example, a piece of data to be scheduled contains requirement information that requires corresponding to a second feature based on a user behavior, a network slice whose network feature is the second feature based on the user behavior is determined as a target network slice from the plurality of network slices, and the data to be scheduled is allocated to the target network slice. The data to be scheduled is allocated to the target network slice to obtain the slice data. The allocating processing above is executed for each piece of data to be scheduled to obtain a plurality of pieces of slice data.

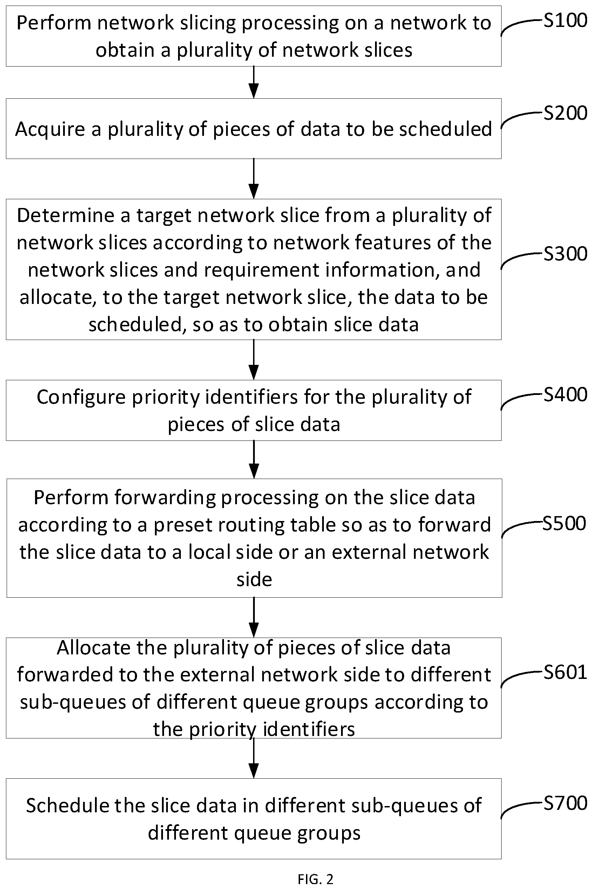

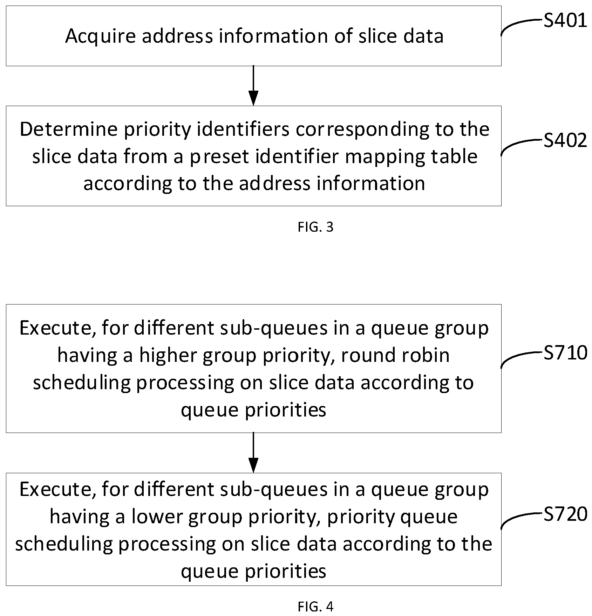

Referring to FIG. 2 and FIG. 3, for step S400, a step of determining priority identifiers is included prior to configuring the priority identifiers for the plurality of pieces of slice data. Determining the priority identifiers includes, but is not limited to, the following steps S401 and S402.

In Step S401, address information of the slice data is acquired.

In Step S402, the priority identifiers corresponding to the slice data are determined from a preset identifier mapping table according to the address information.

For step S401, a message of the data to be scheduled contains a field of address information, so the slice data obtained by allocating the data to be scheduled to a slice also contains a field of address information. The address information of the slice data is acquired, wherein the address information includes an MAC address or an IP address of the slice data.

For step S402, the priority identifiers corresponding to the slice data are determined from the preset identifier mapping table according to the address information.

The priority identifiers are then configured for the plurality of pieces of slice data through an IPtable, wherein the IPtable is a firewall user agent tool based on packet filtering.

Referring to FIG. 2, after the priority identifiers are configured for the slice data, the data scheduling method further executes the following steps to forward the slice data. Step S500, forwarding processing is performed on the slice data according to a preset routing table so as to forward the slice data to a local side or an external network side.

For the slice data forwarded to the local side, internal digestion processing is performed.

For the slice data forwarded to the external network side, a network service is provided.

Step S600 specifically includes the following step: step S601, the plurality of pieces of slice data forwarded to the external network side are allocated to different sub-queues of different queue groups according to the priority identifiers.

A corresponding sub-queue has been determined by querying a data-to-be-scheduled mapping table according to the priority identifiers, the plurality of pieces of slice data is allocated to different sub-queues of different queue groups, wherein the different queue groups have different group priorities, and the different sub-queues in the same queue group have different queue priorities.

In some embodiments, the sub-queues are divided into unicast sub-queues and multicast sub-queues. The slice data is determined to be allocated to a unicast sub-queue or a multicast sub-queue according to the Mac address of the slice data. In some examples, the Mac address of the slice data may be represented in 6-byte hexadecimal, and the Mac address has a total of 48 bits, wherein the 48^{th} bit may be used to represent whether the Mac address is a multicast address or a unicast address. For example, the 48^{th} bit is 1, the Mac address may be determined to be a multicast address, and the slice data is allocated to a multicast sub-queue. The 48^{th} bit is 0, the Mac address may be determined to be a unicast address, and the slice data is allocated to a unicast sub-queue.

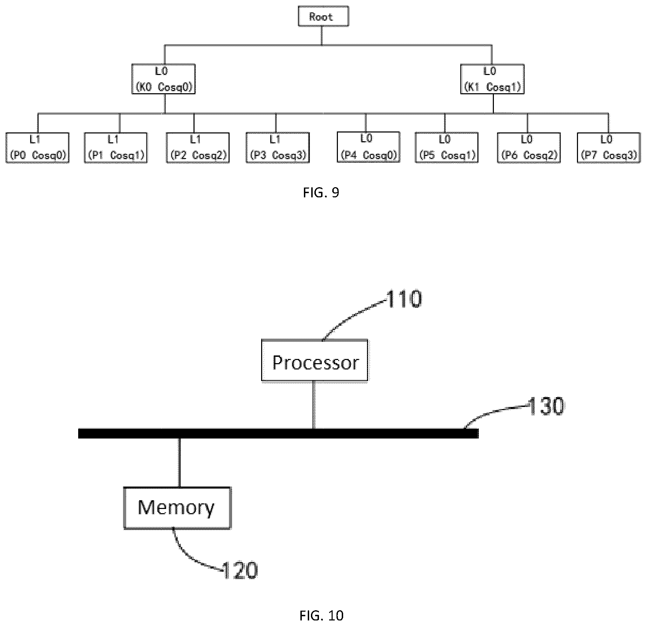

In some embodiments, referring to FIG. 9, FIG. 9 is a schematic diagram of a scheduling policy framework. The scheduling policy framework includes a Root node, an L0 node, and an L1 node. The Root node stores numbers of all queue groups and the group priorities of the queue groups. An L0 node stores numbers of sub-queues in a queue group and queue priorities of the sub-queues. An L1 node stores numbers of unicast sub-queues and multicast sub-queues under a sub-queue and unicast/multicast scheduling priorities. The Root node may store two queue groups, a queue group K0 and a queue group K1 respectively, a group priority of the queue group K0 may be Cosq0, and a group priority of the queue group K1 may be Cosq1. The L0 node corresponding to the queue group K0 may store four sub-queues, respectively a sub-queue P0, a sub-queue P1, a sub-queue P2, and a sub-queue P3, and queue priorities may be Cosq0, Cosq1, Cosq2, and Cosq3 respectively. The L1 node corresponding to the queue group K1 may store four sub-queues, respectively a sub-queue P4, a sub-queue P5, a sub-queue P6, and a sub-queue P7, and queue priorities may be Cosq0, Cosq1, Cosq2, and Cosq3 respectively. Each sub-queue further contains a unicast sub-queue and a multicast sub-queue. When data scheduling is performed, a queue group to be scheduled is determined from the group priorities in the Root node, then a sub-queue to be scheduled is determined from the queue priorities in the L0 node corresponding to the queue group to be scheduled, and then slice data in a unicast sub-queue or multicast sub-queue to be scheduled is determined from the L1 node corresponding to the sub-queue to be scheduled.

Of course, in other embodiments, more or less L0 nodes may be set under each Root node according to actual requirements, and more or less L1 nodes may be set under each L0 node.

Referring to FIG. 4, for step S700, scheduling the slice data in different sub-queues of different queue groups according to round robin scheduling processing and priority queue scheduling processing includes step S710 and step S720.

In Step S710, for different sub-queues in a queue group having a higher group priority, round robin scheduling processing is executed on slice data according to queue priorities.

In Step S720, for different sub-queues in a queue group having a lower group priority, priority queue scheduling processing is executed on slice data according to the queue priorities.

In the data scheduling process, a queue group to be scheduled may be determined according to the group priorities of the Root node in the scheduling policy architecture, and when the queue group to be scheduled is determined to be a queue group with a higher group priority, round robin scheduling processing is executed on the slice data in the sub-queues of the queue group with the higher group priority according to queue priorities. When the queue group to be scheduled is determined to be a queue group with a lower group priority, priority queue scheduling processing is executed on the slice data in the sub-queues of the queue group with the lower group priority according to queue priorities.

For example, the Root node may store two queue groups, a queue group K0 and a queue group K1 respectively, a group priority of the queue group K0 may be Cosq0, and a group priority of the queue group K1 may be Cosq1. The queue group K0 is determined to be a queue group having a higher group priority, and round robin scheduling processing is executed on the slice data in the sub-queues of the queue group K0 according to the queue priorities in the L0 node corresponding to the queue group K0. The queue group K1 is determined to be a queue group having a lower group priority, and priority queue scheduling processing is executed on the slice data in the sub-queues of the queue group K1 according to the queue priorities in the L0 node corresponding to the queue group K1.

It may be understood that for the priority queue (PQ) scheduling processing, the sub-queues with different queue priorities are divided according to a protocol type, a message size, a protocol port number, etc. When there is slice data in a sub-queue with a high queue priority, a sub-queue with a low queue priority cannot be scheduled. During queue scheduling, priority queue scheduling processing sends slice data in a sub-queue with a high queue priority in priority strictly in accordance with an order of queue priorities from high to low. When the sub-queue with the high queue priority is in an occupied state, the slice data in the sub-queue with the high queue priority is sent in priority. When the sub-queue with the high queue priority is in an idle state, slice data in a sub-queue with a low queue priority is then sent. The adoption of the priority queue scheduling processing may allow slice data of a key service, such as slice data of ERP and a video service, to enter a sub-queue having the highest queue priority so as to ensure that it always obtains a forwarding service with priority when the network is congested.

For round robin scheduling processing, which specifically could be weighted round robin (WRR) scheduling, weighted round robin processing is performed on slice data of all sub-queues, and slice data in a sub-queue having a higher queue priority is sent with priority. In most cases, compared to the slice data in the sub-queue having the lower queue priority, round robin scheduling processing first processes the slice data in the sub-queue having the higher queue priority, but when there is a lot of slice data in the sub-queue having the higher queue priority, the slice data in the sub-queue having the lower queue priority is not completely blocked. Round robin scheduling processing can effectively differentiate between all services in the queues. For all sub-queues whose service flows are queued for scheduling, the round robin scheduling processing allocates bandwidths equally according to a ratio of a weight configured for each sub-queue to a sum of weights of all the queues whose service flows are queued for scheduling. Therefore, when services with high priorities of a plurality of users are processed, the round robin scheduling processing can ensure that each user does not occupy network bandwidth resources excessively.

Different queue groups have different group priorities, a scheduling advantage of the data to be scheduled in the queue group having a higher group priority is higher than that of the data to be scheduled in the queue group having a lower group priority, and the data to be scheduled in the queue group having the higher group priority can be continuously scheduled. For different sub-queues in the queue group having a higher group priority, round robin scheduling processing is executed on the slice data according to the queue priority, so that the slice data of all sub-queues in the queue group having a higher group priority can be scheduled in turn, which is able to reduce a case in which slice data of a certain queue continues to occupy resources as compared to priority queue scheduling. For different sub-queues in a queue group having a lower group priority, priority queue scheduling processing is executed on slice data according to the queue priority, so that slice data in the sub-queue having a high queue priority in the queue group having a lower group priority can be scheduled with priority, and compared to round robin scheduling, the slice data in the sub-queue having the high priority uses, with priority, resources in the queue group, thus improving the reliability of important service scheduling. In addition, although the slice data of the sub-queues in the queue group with a lower group priority adopts priority queue scheduling processing, due to a lower scheduling advantage of the slice data in the queue group having the lower group priority, the slice data of the sub-queue with a high priority in the queue group having a lower group priority does not continuously occupy the bandwidth resources as compared to the adoption of priority queue scheduling for all queues, thus reducing cases of interruptions of ordinary service scheduling.

Therefore, the slice data of an important service is allocated to a sub-queue of a queue group having a lower group priority, priority queue scheduling processing is executed on the slice data in this sub-queue in the queue group having the lower group priority, the slice data of an ordinary service is allocated to a sub-queue of the queue group having a higher group priority, round robin scheduling processing is executed on the scheduled data in the sub-queue in the queue group having the higher group priority, and the slice data of the important service is scheduled with priority to a certain extent, while the slice data of the ordinary service can also be scheduled, thus improving the reliability of data scheduling.

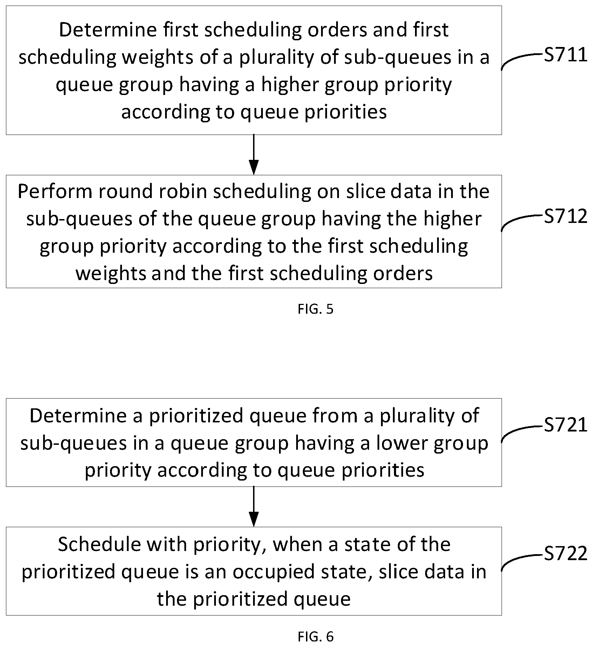

Referring to FIG. 5, for step S710, for different sub-queues in a queue group having a higher group priority, executing round robin scheduling processing on slice data according to queue priorities includes, but is not limited to, the following steps S711 and step S712.

In Step S711, first scheduling orders and first scheduling weights of the plurality of sub-queues in the queue group having the higher group priority are determined according to the queue priorities.

In Step S712, round robin scheduling is performed on the slice data in the sub-queues of the queue group having the higher group priority according to the first scheduling weights and the first scheduling orders.

For example, first scheduling weights of sub-queues in a queue group K0 are determined according to queue priorities in an L0 node corresponding to the queue group K0. For example, it is set that the higher the queue priority, the greater the corresponding first scheduling weight, then, according to that queue priorities of a sub-queue P0, a sub-queue P1, a sub-queue P2, and a sub-queue P3 are Cosq0, Cosq1, Cosq2, and Cosq3 respectively, it is determined that first scheduling weights of the sub-queue P0, the sub-queue P1, the sub-queue P2, and the sub-queue P3 may be 8, 4, 2, and 1 sequentially. Similarly, first scheduling orders of the sub-queues in the queue group K0 are determined according to the queue priorities in the L0 node corresponding to the queue group K0. For example, it is set that the higher the queue priority, the more prioritized the corresponding first scheduling order, then, according to that the queue priorities of the sub-queue P0, the sub-queue P1, the sub-queue P2, and the sub-queue P3 are Cosq0, Cosq1, Cosq2, and Cosq3 respectively, it is determined that first scheduling orders of the sub-queue P0, the sub-queue P1, the sub-queue P2, and the sub-queue P3 are sequentially the sub-queue P0, the sub-queue P1, the sub-queue P2, and the sub-queue P3 from first to last. Then, when scheduling is performed, the sub-queue P0, the sub-queue P1, the sub-queue P2, and the sub-queue P3 are sequentially scheduled. The first scheduling weights of the sub-queues are determined according to the queue priorities, so that important data to be scheduled in the sub-queue with a higher queue priority in the queue group having a higher group priority may relatively occupy more bandwidth resources.

Referring to FIG. 6, for step S720, for different sub-queues in a queue group having a lower group priority, executing priority queue scheduling processing on slice data according to the queue priorities includes, but is not limited to, the following step S721 and step S722.

In Step S721, a prioritized queue is determined from a plurality of sub-queues in a queue group having a lower group priority according to the queue priorities, wherein the prioritized queue is a sub-queue having a highest queue priority.

In Step S722, when a state of the prioritized queue is an occupied state, slice data in the prioritized queue is scheduled with priority.

In this embodiment, a prioritized queue in the queue group K1 is determined from a sub-queue P4, a sub-queue P5, a sub-queue P6, and a sub-queue P7 according to queue priorities in the L1 node corresponding to the queue group K1. According to that the queue priorities of the sub-queue P4, the sub-queue P5, the sub-queue P6, and the sub-queue P7 are Cosq0, Cosq1, Cosq2, and Cosq3 respectively, the prioritized queue is determined to be the sub-queue P4 from the sub-queue P4, the sub-queue P5, the sub-queue P6, and the sub-queue P7.

When a state of the sub-queue P4 is an occupied state, i.e., there is slice data allocated in the sub-queue P4, the slice data in the sub-queue P4 is scheduled with priority. Allocating important data to a prioritized queue of a queue group having a lower group priority can reduce the case in which important data continuously occupies bandwidth resources, and at the same time, important data may occupy bandwidth resources with priority in a queue group having a lower group priority, thereby improving the user experience.

Referring to FIG. 7, step S720 further includes, but is not limited to, the following steps S723 and S724.

In Step S723, round robin queues are determined from a plurality of sub-queues in the queue group having a lower group priority according to the queue priorities, wherein the round robin queues are sub-queues other than the prioritized queue.

In Step S724, when the state of the prioritized queue is an idle state, round robin scheduling is performed on slice data in the plurality of round robin queues.

A prioritized queue in the queue group K1 is determined from the sub-queue P4, the sub-queue P5, the sub-queue P6, and the sub-queue P7 according to the queue priorities in the L1 node corresponding to the queue group K1. According to that the queue priorities of the sub-queue P4, the sub-queue P5, the sub-queue P6, and the sub-queue P7 are Cosq0, Cosq1, Cosq2, and Cosq3 respectively, the prioritized queue is determined to be the sub-queue P4 from the sub-queue P4, the sub-queue P5, the sub-queue P6, and the sub-queue P7, and the sub-queue P5, the sub-queue P6, and the sub-queue P7 are round robin queues.

When the state of the sub-queue P4 is an idle state, i.e., there is no slice data in the sub-queue P4, second scheduling orders and second scheduling weights of different round robin queues are determined according to the queue priorities, and round robin scheduling is performed on data to be scheduled in the round robin queues according to the second scheduling weights and the second scheduling orders. Second scheduling weights of the sub-queue P5, the sub-queue P6, and the sub-queue P7 are determined according to queue priorities. For example, it is set that the higher the queue priority, the greater the corresponding first scheduling weight, then, according to that the queue priorities of the sub-queue P5, the sub-queue P6, and the sub-queue P7 are Cosq1, Cosq2, and Cosq3 respectively, it is determined that the second scheduling weights of the sub-queue P5, the sub-queue P6, and the sub-queue P7 may be sequentially 4, 2, and 1. Second scheduling orders of the sub-queue P5, the sub-queue P6, and the sub-queue P7 are determined according to the queue priorities. For example, it is set that the higher the queue priority, the greater the corresponding second scheduling order, then, according to that the queue priorities of the sub-queue P5, the sub-queue P6, and the sub-queue P7 are Cosq1, Cosq2, and Cosq3 respectively, it is determined that second scheduling orders of the sub-queue P5, the sub-queue P6, and the sub-queue P7 are sequentially the sub-queue P5, the sub-queue P6, and the sub-queue P7 from first to last. Then, when scheduling is performed, the sub-queue P5, the sub-queue P6, and the sub-queue P7 are sequentially scheduled. The first scheduling weights of the sub-queues are determined according to the queue priorities, so that important data to be scheduled in the sub-queue with a higher queue priority in the round robin queue may relatively occupy more bandwidth resources.

Important data may be allocated to the sub-queue P4, the important data in the sub-queue P4 can be scheduled with priority in the queue group K1, and bandwidth resources in the group are used with priority, thereby improving the reliability of scheduling for important data. Ordinary data may be allocated to the sub-queue P5, the sub-queue P6, and the sub-queue P7, so that the sub-queue P5, the sub-queue P6, and the sub-queue P7 can be scheduled in turn, which can reduce the case in which the sub-queue P5, the sub-queue P6, and the sub-queue P7 which have lower queue priorities cannot be scheduled as compared to a mode of using priority queue scheduling for all the sub-queues in the queue group K1.

An embodiment of the present application further provides an electronic device. Referring to FIG. 10, FIG. 10 is a structural diagram of an electronic device. The electronic device includes one or more processors 110 and a memory 120. The processor 110 and the memory 120 may be connected via a bus 130 or other means.

The memory 120, as a non-transient computer readable storage medium, may be used to store a non-transient software program as well as a non-transient computer executable program, such as above data scheduling in the embodiments of the present application. The processor 110510 implements the above data scheduling method in the embodiments of the present application by running the non-transient software program stored in the memory 120 as well as the program. For example, step S200, step S300, step S400, step S600, and step S700 in FIG. 1, step S100 to step S700 in FIG. 2, step S401 to step S402 in FIG. 3, step S710 to step S720 in FIG. 4, step S711 to step S712 in FIG. 5, step S721 to step S722 in FIG. 6, and step S723 to step S724 in FIG. 7 described above are executed.

In this embodiment, a plurality of pieces of data to be scheduled is acquired, and the data to be scheduled includes requirement information representing required network features. For each piece of data to be scheduled, a target network slice is determined from a plurality of network slices according to network features of the network slices and the requirement information, and the data to be scheduled is allocated to the target network slice, so as to obtain slice data. Priority identifiers are configured for the plurality of pieces of slice data. The plurality of pieces of slice data are allocated to different sub-queues of different queue groups according to the priority identifiers. The slice data in different sub-queues of different queue groups is scheduled according to round robin scheduling processing and priority queue scheduling processing. According to the solutions provided by the embodiment of the present application, the different data to be scheduled is configured into the different network slices according to the network features, the slice data is allocated into queues according to the priorities, the slice data in the queues is scheduled in combination with the round robin scheduling processing and the priority queue scheduling processing, so that important slice data is scheduled with priority to a certain extent, while ordinary slice data can also be scheduled, which realizes reasonable scheduling of different slice data and thus improves the network quality of service.

The memory 120 may include a program area and a data area, wherein the program area may store an operating system, and an application program required by at least one function, and the data area may store data, etc., required to execute data scheduling in the above embodiments of the present application. In addition, the memory 120 may include a high-speed random access memory 120, and may further include a non-transient memory 120, such as at least one disk memory device, a flash memory device, or other non-transient solid state memory device. In some implementations, the memory 120 optionally includes memories 120 remotely arranged relative to the processor 110, and these remote memories 120 may be connected to this terminal via a network. Examples of the above network include, but are not limited to, the Internet, corporate intranets, local area networks, mobile communication networks, and combinations thereof.

The non-transient software program required to implement the above data scheduling in the embodiments of the present application, as well as the program, are stored in the memory 120, and when executed by one or more processors 110, execute the above data scheduling in the embodiments of the present application.

The node embodiment described above is merely illustrative. Units described as separate parts may or may not be physically separated, that is, they may be located in one place, or they may be distributed onto a plurality of network units. Some or all of the modules can be selected according to actual needs to realize the purpose of the solution of the embodiment.

In addition, an embodiment of the present application further provides a computer readable storage medium, storing a computer executable instruction, and the computer executable instruction is executed by a processor or controller, e.g., by a processor, so that the above processor executes the data scheduling in the above embodiment. For example, step S200, step S300, step S400, step S600, and step S700 in FIG. 1, step S100 to step S700 in FIG. 2, step S401 to step S402 in FIG. 3, step S710 to step S720 in FIG. 4, step S711 to step S712 in FIG. 5, step S721 to step S722 in FIG. 6, and step S723 to step S724 in FIG. 7 described above are executed.

In this embodiment, a plurality of pieces of data to be scheduled is acquired, and the data to be scheduled includes requirement information representing required network features. For each piece of data to be scheduled, a target network slice is determined from a plurality of network slices according to network features of the network slices and the requirement information, and the data to be scheduled is allocated to the target network slice, so as to obtain slice data. Priority identifiers are configured for the plurality of pieces of slice data. The plurality of pieces of slice data are allocated to different sub-queues of different queue groups according to the priority identifiers. The slice data in different sub-queues of different queue groups is scheduled according to round robin scheduling processing and priority queue scheduling processing. According to the solutions provided by the embodiment of the present application, the different data to be scheduled is configured into the different network slices according to the network features, the slice data is allocated into queues according to the priorities, the slice data in the queues is scheduled in combination with the round robin scheduling processing and the priority queue scheduling processing, so that important slice data is scheduled with priority to a certain extent, while ordinary slice data can also be scheduled, which realizes reasonable scheduling of different slice data and thus improves the network quality of service.

The embodiment of the present application includes: acquiring a plurality of pieces of data to be scheduled, wherein the data to be scheduled includes requirement information representing required network features; determining, for each piece of data to be scheduled, a target network slice from a plurality of network slices according to network features of the network slices and the requirement information, and, allocating, to the target network slice, the data to be scheduled, so as to obtain slice data; configuring priority identifiers for the plurality of pieces of slice data; allocating the plurality of pieces of slice data to different sub-queues of different queue groups according to the priority identifiers; and scheduling the slice data in different sub-queues of different queue groups. According to the solutions provided by the embodiment of the present application, the different data to be scheduled is configured into the different network slices according to the network features, the slice data is allocated into queues according to the priorities, the slice data in the queues is scheduled in combination with the round robin scheduling processing and the priority queue scheduling processing, so that important slice data is scheduled with priority to a certain extent, while ordinary slice data can also be scheduled, which realizes reasonable scheduling of different slice data and thus improves the network quality of service.

It may be understood by those of ordinary skill in the art that all or some of the steps in the methods disclosed above, and systems may be implemented as software, firmware, hardware, and appropriate combinations thereof. Some or all of the physical components may be implemented as software executed by a processor, such as a central processor, a digital signal processor, or a microprocessor, or implemented as hardware, or implemented as an integrated circuit, such as a specialized integrated circuit. Such software may be distributed on a computer readable medium, and the computer readable medium may include a computer storage medium (or non-transitory medium) and a communication medium (or transitory medium). As is well known to those of ordinary skill in the art, the term computer storage medium includes volatile and non-volatile, removable and non-removable media implemented in any method or technology for storing information (such as a computer readable instruction, data structure, program module, or other data). The computer storage medium includes, but is not limited to, a RAM, a ROM, an EEPROM, a flash memory or other memory technology, a CD-ROM, a digital versatile disk (DVD) or other optical disk storage, a magnetic cartridge, a magnetic tape, magnetic disk storage, or other magnetic storage apparatus, or any other medium that may be used for storing desired information and that may be accessed by a computer. In addition, it is well known to those of ordinary skill in the art that the communication medium typically contains a computer readable instruction, a data structure, a program module, or other data in a modulated data signal such as a carrier wave or other transmission mechanism, and may include any information delivery medium.

## Claims

1. A data scheduling method, comprising:
acquiring a plurality of pieces of data to be scheduled, wherein the data to be scheduled comprises requirement information, and the requirement information represents network features required by the data to be scheduled;
determining, for each piece of data to be scheduled, a target network slice from a plurality of network slices according to network features of the network slices and the requirement information, and allocating, to the target network slice, the data to be scheduled, so as to obtain slice data;
configuring priority identifiers for the plurality of pieces of slice data;
allocating the plurality of pieces of slice data to different sub-queues of different queue groups according to the priority identifiers; and
scheduling the slice data in different sub-queues of different queue groups.

2. The data scheduling method according to claim 1, wherein prior to determining a target network slice from a plurality of network slices, the data scheduling method further comprises:
performing network slicing processing on a network to obtain a plurality of network slices, wherein the different network slices have the different network features.

3. The data scheduling method according to claim 2, wherein the network features comprise at least one of a first feature based on a user terminal, a second feature based on a user behavior, a third feature based on a network load, a fourth feature based on an IP quintet, and a fifth feature based on a virtual local area network.

4. The data scheduling method according to claim 1, wherein prior to configuring priority identifiers for the plurality of pieces of slice data, the data scheduling method further comprises:
acquiring address information of the slice data; and
determining priority identifiers corresponding to the slice data from a preset identifier mapping table according to the address information.

5. The data scheduling method according to claim 4, wherein acquiring address information of the slice data comprises:
acquiring MAC addresses of the slice data; or,
acquiring IP addresses of the slice data.

6. The data scheduling method according to claim 1, wherein prior to allocating the plurality of pieces of slice data to different sub-queues of different queue groups according to the priority identifiers, the data scheduling method further comprises:
performing forwarding processing on the slice data according to a preset routing table so as to forward the slice data to a local side or an external network side.

7. The data scheduling method according to claim 6, wherein allocating the plurality of pieces of slice data to different sub-queues of different queue groups according to the priority identifiers comprises:
allocating the plurality of pieces of slice data forwarded to the external network side to different sub-queues of different queue groups according to the priority identifiers.

8. The data scheduling method according to claim 1, wherein the different queue groups have different group priorities, and the different sub-queues in the same queue group have different queue priorities; and scheduling the slice data in the different sub-queues of the different queue groups comprises:
executing, for different sub-queues in a queue group having a higher group priority, round robin scheduling processing on the slice data according to the queue priorities; and
executing, for different sub-queues in a queue group having a lower group priority, priority queue scheduling processing on the slice data according to the queue priorities.

9. An electronic device, comprising a memory, a processor and a computer program stored on the memory and capable of running on the processor, wherein the processor, when executing the computer program, implements the data scheduling method according to any one of claims 1 to 8.

10. A computer readable storage medium, storing a computer executable instruction, wherein the computer executable instruction is used to execute the data scheduling method according to any one of claims 1 to 8.
